# EUROPÄISCHE PATENTSCHRIFT

(11) **EP 0 538 677 B1**
(45) Veröffentlichungstag und Bekanntmachung des Hinweises auf die Patenterteilung: **20.01.1999**
(21) Anmeldenummer: 92117146.8
(22) Anmeldetag: 08.10.1992
(51) Int. Cl.: B29B 17/02

(54) **Verfahren zum Rückgewinnen von Treibmitteln aus Polymerschaumstoffen**
Process for recovery of blowing agents from polymeric foams
Procédé de récupération d'agents gonflants de mousses polymères

(30) Priorität: 12.10.1991 DE 4133915
(43) Veröffentlichungstag der Anmeldung: 28.04.1993
(73) Patentinhaber: BRESCH ENTSORGUNG GmbH, D-24539 Neumünster (DE)
(72) Erfinder: Landahl, Claus-Dieter, W-2351 Gross-Kummerfeld (DE)

(56) Entgegenhaltungen:
- EP-A- 433 638
- EP-A- 495 153
- WO-A-91/02638
- DE-A- 3 810 428
- DE-A- 3 900 441
- DE-A- 3 911 326
- DE-A- 3 915 400
- DE-A- 3 933 811
- DE-A- 4 027 056
- DE-C- 3 905 610

## Beschreibung

Die vorliegende Erfindung betrifft ein Verfahren zum Abtrennen von Treibgasen, insbesondere Fluorchlorkohlenwasserstoffen aus Schaumstoffen, insbesondere aus Polyurethan-Schaumstoff, durch Zerkleinerung der Schaumstoffe in einem bestimmten Temperaturbereich, wobei das entweichende Treibgas/Trägergas-Gemisch einer Treibgas/Trägergas-Trennanlage zugeführt werden kann.

Schaumstoffe werden im allgemeinen unter Verwendung eines Treibgases erzeugt. Technisch von besonderer Bedeutung, insbesondere im Isolierbereich, z. B. im Baugewerbe oder bei der Kühlschrankherstellung, ist der Polyurethan-Schaum. Andere durch Treibmittel hergestellte Schaumstoffe sind beispielsweise Polystyrol und Schaumgummis. Die Treibmittel sind in den Bläschen des geschäumten Materials enthalten und entweichen nach und nach aus denselben in die Atmosphäre, besonders aus teilweise beschädigten Altschaumstoffen. Dies hat zur Folge, daß die Treibmittel nach und nach auch in die höheren Bereiche der Atmosphäre gelangen. Es ist bekannt, daß auf diese Weise Fluorchlorkohlenwasserstoffe in der Stratosphäre durch Umsetzung mit Ozon die Ozonschicht zerstören.

Es ist daher eine sehr wichtige Aufgabenstellung, Schaumstoffabfälle so aufzuarbeiten, daß die Treibmittel vollständig abgetrennt werden können und daß das verbleibende Schaumstoffmaterial ggf. einer Wiederverwertung zugeführt werden kann.

Die bisherigen Maßnahmen zur Lösung dieser Aufgabe sind unbefriedigend. So wird Polyurethan-Schaum über Kalander zerkleinert. Es bleiben jedoch noch immer Treibmittelreste im Schaummaterial.

In der DE-A- 38 10 428 wird ein Verfahren zur Rückgewinnung von Halogenkohlenwasserstoffen aus Schaumstoffen offenbart, bei dem man diese auf kleiner als 0,5 mm zerkleinert bei einer Temperatur von -196 bis 100 °C. Die Zerkleinerung erfolgt in Walzen-, Rollen-, Hammer- oder vorzugsweise Schneidmühlen, Zerspanern oder Messerhackern.

In der EP 0 433 638 A2 werden ein Verfahren und eine Anlage zum Entsorgen von teilentsorgten Kühlschränken offenbart, wobei eine mehrstufige Zerkleinerungsanlage eingesetzt wird. Die Feinmahlung erfolgt in einer Gebläsemühle. Bei der Kondensation des die Halogenkohlenwasserstoffe enthaltenden Luftgemischs fällt ein Gemisch von Wasser und flüssigen Halogenkohlenwasserstoffen an.

Der Anmelderin ist es nunmehr überraschend gelungen, durch die vorliegende Erfindung Treibgase, insbesondere Fluorchlorkohlenwasserstoffe vollständig aus dem Schaummaterial, insbesondere aus Polyurethan-Schaum zu entfernen, durch Vorzerkleinerung und Feinzerkleinerung des Schaumstoffs auf eine Korngröße von 1,5 bis 0,001 mm bei erhöhter Temperatur und Abführung und Kondensation des freigesetzten Treibgases wobei auf eine Korngröße von 100 mm bis 1,5 mm bevorzugt von 60 mm bis 3 mm und besonders bevorzugt von 40 mm bis 15 mm vorzerkleinert wird und in einem Feinzerkleinerungsarbeitsgang das vorzerkleinerte Material in einem Kollergang zerkleinert wird, wobei durch die Mahl-, Reib-, Scher- und Schneidvorgänge bei der Feinzerkleinerung Temperaturen von 60 °C bis 160 °C erzeugt werden

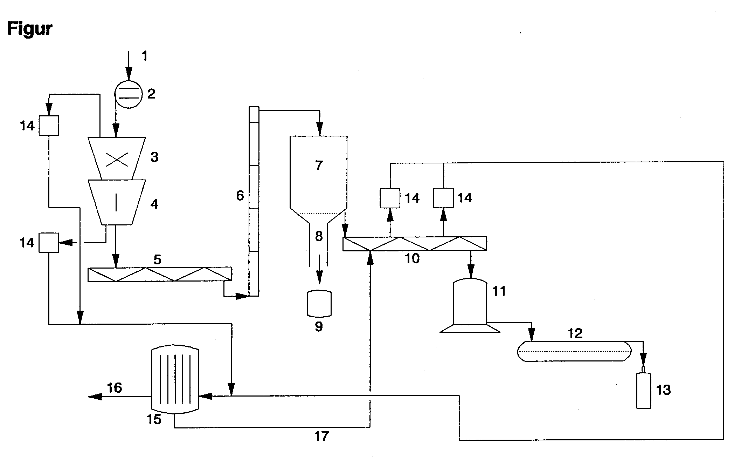

Die Figur stellt beispielhaft eine erfindungsgemäße Anlage dar.

Durch die erfindungsgemäße Zerkleinerung auf die genannte Korngröße bei der angegebenen Temperatur werden vor allem durch Reib-, Scher-, Mahl- und Schneidkräfte nicht nur die Schaumstoffblasen geöffnet, sondern es werden auch die Abhäsionskräfte gebrochen, durch welche die Treibmittelmoleküle an die Schaumstoffmaterialien gebunden sind.

Erfindungsgemäß werden die beladenen Schaumstoffe zunächst einer Vorserkleinerung zugeführt, so daß das Material eine Korngröße von 100 mm bis 1,5 mm, bevorzugt von 60 mm bis 5 mm und besonders bevorzugt von 40 mm bis 2 mm, besitzt. Zweckmäßigerweise sollte der Vorzerkleinerungsvorrichtung ein Magnetabscheider vorgeschaltet sein, um zu vermeiden, daß Metallstücke die Vorzerkleinerungsvorrichtung beschädigen. Die Vorzerkleinerungsvorrichtung kann aus üblichen Geräten bestehen, wie z. B. einem Vorbrecher mit nachfolgender Schneidmühle oder anderen, dem Fachmann bekannten, Zerkleinerungsvorrichtungen.

Das vorzerkleinerte Produkt wird dann in der eigentlichen Feinzerkleinerung auf eine Korngröße im Bereich von 1,5 mm bis 0,001 mm, bevorzugt von 1 mm bis 0,01 mm, zerkleinert.

Als Feinzerkleinerungsapparatur wird ein Kollergang eingesetzt. Die erfindungsgemäßen Temperaturen von 60 °C bis 160 °C entstehen erfindungsgemäß im Kollergang durch die Mahl-, Reib-, Scher- und Schneidvorgänge, da im Kollergang durch umlaufende Walzen Material durch kleine, im allgemeinen konische Bohrungen gepreßt wird.

Die genannten Zerkleinerungsvorgänge führen dazu, daß sämtliche Schaumstoffzellen und - bläschen aufgebrochen werden. Durch den erfindungsgemäßen Temperaturbereich werden hierbei auch die Adhäsionskräfte zwischen den Treibmittelmolekülen und den Wandungen der Zellen und Bläschen vollständig gebrochen, so daß das Treibgas vollständig aus dem Schaumstoff austritt. Die erfindungsgemäßen Temperaturen von 60 bis 160 °C sind, wie die Anmelderin überraschend gefunden hat, von großer Bedeutung. Während unterhalb 60 °C das Treibgas mur teilweise entweicht, können oberhalb 160 °C schon so starke Schädigungen am Schaumstoffmaterial auftreten, daß das Material nicht mehr wiederverwendbar ist.

Die Verweilzeiten in der Feinzerkleinerungsvorrichtung müssen so eingestellt werden, daß im angegebenen Temperaturbereich genügend Zeit zur Verfügung steht, daß das Treibgas vollständig entweichen kann.

Im allgemeinen genügt eine Feinzerkleinerungsvorrichtung, erfindungsgemäß können jedoch auch mehrere parallel oder hintereinander geschaltete eingesetzt werden.

Obgleich das erfindungsgemäße Verfahren für alle Treibgas/Schaumstoff-Kombinationen geeignet ist, eignet es sich im besonderen Maße zur Aufarbeitung von mit Fluorchlorkohlenwasserstoffen geschäumten Polyurethan-Schaumstoffen.

Im erfindungsgemäßen Verfahren ist es von Vorteil, wenn der Feinzerkleinerung eine Homogenisierungsvorrichtung vorgeschaltet ist. In dieser wird das vorzerkleinerte Material so gemischt, daß auch die im Material vorhandene Feuchtigkeit gleichmäßig über die Schaumstoffpartikel verteilt wird, so daß nicht ein Gemisch von relativ nassen und trockenen Partikeln in die Feinzerkleinerungsvorrichtung gelangt. Die Homogenisierung kann z. B. durch Rühren oder sonstige Umwälzung erreicht werden.

In der Homogenisierungsvorrichtung können feste Partikel, wie zum Beispiel Schrottmaterialien, Steinmaterialien und dergleichen nach unten ausgeschleust werden. Sie können in einem Sammelbehälter gesammelt werden. Das homogenisierte Gut fällt auf eine Dosierschnecke, von der das Gut in die Feinzerkleinerungsvorrichtung gelangt.

Bevorzugt von der Dosierschnecke, jedoch auch aus der Vorzerkleinerungsvorrichtung gehen Leitungen ab, durch die das Treibgas/Trägergas-Gemisch, im allgemeinen Treibgas/Luft-Gemisch abfließt. Es gelangt über Filter und kann vorteilhafterweise in einem Kondensator von Feuchtigkeit befreit werden und anschließend beispielsweise einer Treibgas/Trägergas-Trennanlage zugeführt werden.

Es ist selbstverständlich, daß die gesamte erfindungsgemäße Anlage gasdicht ist, so daß alles Treibgas den beschriebenen Weg gehen muß. Treibgas/Trägergas-Abgänge können auch an anderen Stellen der Gesamtanlage angebracht sein.

Das im Kondensator zur Behandlung des ausgetretenen Treibgas/Trägergas-Gemischs anfallende Wasser ist im wesentlichen Treibgas-frei, so daß die Feuchtigkeit wieder dem Schaumstoffmaterial zugeführt werden kann. Dies kann zweckmäßigerweise in der der Feinzerkleinerungsvorrichtung vorgeschaltenen Dosierschnecke stattfinden. Vom Transportband hinter der Feinzerkleinerungsvorrichtung kann das Gut in Säcke oder sonstige Behälter abgefüllt werden.

Die vorliegende Erfindung soll nunmehr mit Hilfe der Figur beispielhaft näher erläutert werden.

### Figur

Über Leitung 1 gelangt nicht vorzerkleinertes Schaumstoffgut in Magnetabscheider 2. Aus diesem wird das Gut in Vorbrecher 3 befördert und von dort in Schneidmühle 4.

Das vorzerkleinerte Gut wird nun über Förderschnecke 5 und Lift 6 in den Homogenisierer 7 befördert, aus dem über 8 Schwerstoffe in Behälter 9 gelangen.

Das homogenisierte Schaumstoffgut gelangt aus 7 in Dosierschnecke 10 und von dort in Kollergang 11. Über Förderband 12 wird das Treibgas-freie Schaumstoffmaterial in Behälter 13 abgefüllt. Das Treibgas/Trägergas-Gemisch gelangt über die Filter 14 in Kondensator 15. Von 15 gelangt das entwässerte Gasgemisch über Leitung 16 zu einer Treibgas/Trägergas-Trennanlage.

Das in 15 anfallende Wasser kann über Leitung 17 nach Dosierschnecke 10 befördert werden.

## Patentansprüche

1. Verfahren zum Abtrennen von Treibgasen aus Schaumstoffen durch Vorzerkleinerung und Feinzerkleinerung des Schaumstoffs auf eine Korngröße von 1,5 bis 0,001 mm bei erhöhter Temperatur und Abführung und Kondensation des freigesetzten Treibgases, wobei auf eine Korngröße von 100 mm bis 1,5 mm, bevorzugt von 60 mm bis 3 mm und besonders bevorzugt von 40 mm bis 15 mm vorzerkleinert wird und in einem Feinzerkleinerungsarbeitsgang das vorzerkleinerte Material in einem Kollergang zerkleinert wird, wobei durch die Mahl-, Reib-, Scher- und Schneidvorgänge bei der Feinzerkleinerung Temperaturen von 60 °C bis 160 °C erzeugt werden.

2. Verfahren nach Anspruch 1, dadurch gekennzeichnet, daß der Schaumstoff Polyurethan-Schaumstoff ist.

3. Verfahren nach den Ansprüchen 1 und 2, dadurch gekennzeichnet, daß das Treibgas Fluorchlorkohlenwasserstoff ist.

4. Verfahren nach den Ansprüchen 1 bis 3, dadurch gekennzeichnet, daß dem Feinzerkleinerungsarbeitsgang eine Homogenisierung vorgeschaltet ist.

5. Verfahren nach den Ansprüchen 1 bis 4, dadurch gekennzeichnet, daß aus der Homogenisierungsvorrichtung Schwerteile abgetrennt werden.

6. Verfahren nach den Ansprüchen 1 bis 5, dadurch gekennzeichnet, daß die Vorzerkleinerung in einem Vorbrecher und/oder einer Schneidmühle durchgeführt wird.

7. Verfahren nach den Ansprüchen 1 bis 6, dadurch gekennzeichnet, daß zumindest im Bereich der Vorzerkleinerungsvorrichtung und der Feinzerkleinerungsvorrichtung über Filter Fluorchlorkohlenwasserstoff in einem Fluorchlorkohlenwasserstoff enthaltenden Trägergasstrom abgeführt wird.

8. Verfahren nach den Ansprüchen 1 bis 7, dadurch gekennzeichnet, daß das Trägergas Luft ist.

9. Verfahren nach den Ansprüchen 1 bis 8, dadurch gekennzeichnet, daß das Fluorchlorkohlenwasserstoff enthaltende Trägergas einem Kondensator zur Wasserabscheidung zugeführt wird.

10. Verfahren nach den Ansprüchen 1 bis 9, dadurch gekennzeichnet, daß das gemäß Anspruch 9 abgeschiedene Wasser dem vorzerkleinerten Schaum vor der Feinzerkleinerung zugeführt wird.

11. Verfahren nach den Ansprüchen 1 bis 10, dadurch gekennzeichnet, daß der Vorzerkleinerungsvorrichtung ein Magnetabscheider vorgeschaltet ist.

12. Verfahren nach den Ansprüchen 1 bis 11, dadurch gekennzeichnet, daß das Treibgas/Trägergasgemisch einer Trennanlage zugeführt wird.

## Claims

1. Process for the separation of propellants from foams by precrushing and fine grinding of the foam to a grain size of 1,5 to 0,001 mm at elevated temperature and removing and condensing of the liberated propellant,whereby a precrushing to a grain size of 100 mm to 1,5 mm,preferably of 60 mm to 3 mm and particularly preferable of 40 mm t0 15 mm is carried out and in a fine grinding operation the precrushed material is ground by crushing rollers,whereby by milling-,rubbing-, shearing- and cutting processes during fine grinding a temperature of 60°C to 160°C is generated.

2. Process according to claim 1,characterized in that the foam is polyurethane foam.

3. Process according to claims 1 and 2,characterized in that the propellant is fluorochlorohydrocarbon.

4. Process according to claims 1 to 3,characterized in that fine grinding is preceded by homogenization.

5. Process according to claims 1 to 4,characterized in that heavy parts are separated from the homogenization device.

6. Process according to claims 1 to 5,characterized in that precrushing is carried out in a prebreaking device or a cutting mill.

7. Process according to claims 1 to 6,characterized in that at least within the zone of the precrushing device and the fine grinding device,fluorochlorohydrocarbon is removed in a carrier gas stream containing fluorochlorohydrocarbon through filters.

8. Process according to claims 1 to 7,characterized in that the carrier gas is air.

9. Process according to claims 1 to 8,characterized in that the carrier gas containing fluorochlorohydrocarbon is led to a condenser for the separation of water.

10. Process according to claims 1 to 9,characterized in that the separated water according to claim 9, is added to the precrushed foam before fine grinding.

11. Process according to claims 1 to 10,characterized in that the precrushing device is preceded by a magnetic separator.

12. Process according to claims 1 to 11,characterized in that the propellant-/carrier gas mixture is led to a separating unit.

## Revendications

1. Procédé pour la séparation des agents moussants des produits alvéolaires par prébroyer et broyage du produit alvéolaire à une grosseur de grain de 1,5 mm à 0,001 mm à une température élevée et emmener et condensation du agent moussant libéré à l'occasion de quoi on prébroye à une grosseur de grain de 100 mm à 1,5 mm,préférentielle de 60 mm à 3 mm et en particulier préférentielle de 40 mm à 15 mm et par une opération de broyage la matière prébroyée est broyée dans un broyeur à meules verticales à l'occasion de quoi par des procédés de moudre-,de friction-, d'effort de cisaillement- et de couper pendant le broyage,températures de 60°C à 160°C sont obtenues.

2. Procédé selon la revendication 1,caractérisée en ce que le produit alvéolaire est une mousse de polyuréthane.

3. Procédé selon les revendications 1 et 2,caractérisé en ce que l'agent moussant est un fluorochlorohydrocarbure.

4. Procédé selon les revendications 1 à 3,caractérisé en ce que une opération de homogénéisation est intercalée au broyage.

5. Procédé selon les revendications 1 à 4,caractérisé en ce que des parties lourdes sont separées du dispositif à homogénéisation.

6. Procédé selon les revendications 1 à 5,caractérisé en ce que le prébroyage est exécuté dans un préconcasseur et/ou dans un moulin de coupe.

7. Procédé selon les revendications 1 à 6,caractérisé en ce que au moins dans la zone du dispositif à prébroyer et du dispositif à broyer,fluorochlorohydrocarbures sont emmenés par un courant du gaz supportant par des filtres.

8. Procédé selon les revendications 1 à 7,caractérisé en ce que le gaz supportant est de l'air.

9. Procédé selon les revendications 1 à 8,caratérisé en ce que le gaz supportant contenant le fluorochlorohydrocarbure est amené à un condensateur pour la séparation de l'eau.

10. Procédé selon les revendications 1 à 9,caractérisé en ce que l'eau séparé selon la revendication 9 est amené au produit alvéolaire prébroyé devant le broyage.

11. Procédé selon les revendications 1 à 10,caractérisé en ce que un séparateur magnétique est intercalé au dispositif à broyage.

12. Procédé selon les revendications 1 à 11,caractérisé en ce que le mélange du agent moussant et du gaz supportant est amené à un dispositif à séparation.
